# EUROPEAN PATENT APPLICATION

(11) **EP 1 259 003 A1**
(43) Date of publication of application: **20.11.2002**
(21) Application number: 02253354.1
(22) Date of filing: 14.05.2002
(51) Int. Cl.: H04B 1/20

(54) **REMOTE CONTROL THAT CAN BE WORN ON THE WRIST**

(30) Priority: 15.05.2001 US 854606
(71) Applicant: Yang, Tai-Her, Si-Hu Town, Dzan-Hwa (TW)
(72) Inventor: Yang, Tai-Her, Si-Hu Town, Dzan-Hwa (TW)
(74) Representative: Pratt, David Martin

(57) **Abstract**

A wrist and hand-held wireless or wired control device comprised of a control casing containing circuit, I/O control interface and display interface and a flexible wristband allowing transformation made of foldable or soft materials extending at both ends of the control casing in fully or semi-closed loop to be worn in a wrist for wrist control operation or removed for adjustment of the diameter of the wristband to compromise hand-held or finger grip operation in receiving or/and transmitting commands, or transmitting information, audio signals, video signals for display, or applying partial or total wired control or wireless remote control to a certain system to achieve the purposes of easy carrying along and storage and preventing from falling on the ground in use while giving flexible transformation and comfortable holding for control operation that meeting ergonomics

## Description

### BACKGROUND OF THE INVENTION

### (a)Field of the Invention

The present invention related to a wrist and hand-held wireless or wired control device, and more particularly, to one that provided with a foldable or soft portion that is flexible and capable of transforming into a fully closed loop or semi-closed loop extending in both ends of a casing for wearing on one wrist or holding by hand or by a finger penetrating into the loop for adjustment of its diameter. The casing contains circuits, output interface and display interface to receive or/and transmit, operate and control commands, to transmit information or to apply wired operation or wireless remote control to a certain device. The present invention utilizes a wrist band similar to that of a wrist watch to incorporate with a hand-held I/O device for the user either wears it on the wrist while using another hand to operate the control, or it may be removed from the wrist and held for finger operation while being secured by some or all of the rest of the fingers through the loop to facilitate carrying along, storing and preventing from falling off in the course of operation. The design of the present invention compromises flexible transformation in ergonomics.

### (b) Description of the Prior Art:

The prior art of hand-held control device applied in receiving, transmitting, controlling and operating commands or transmitting information or applying wired control or wireless remote control to a certain device generally relates to directly grip the casing by its fixed handle in the hand. It when compared to a desktop control device offers the advantage of allowing more space in control without being limited by the desktop. Though being compact in size said hand-held control device prevents from easy storage and carrying due to its fixed handle, and is vulnerable to falling on the ground while in use. To modify, a control device generally available in the market, also an invention by this inventor provides a fixture comprised of multiple openings in various sizes for hand-held operation. However, such modified design also exposes to defects of being awkward to carry along or store due to its larger dimension. To correct those defects, the present invention provides a control casing adapted to a wrist band for wearing on the wrist or in flattened shape to facilitate storage, and the wrist band is adjustable to be incorporated into a casing of a control device for hand-held operation in the way most comfortable to the user.

### SUMMARY OF THE INVENTION

The primary purpose of the present invention is to provide a wrist and hand-held wired or wireless control device by incorporating traditional circuit, control interface and display interface of traditional hand-held control device including mechanical electrical control interface of a ball, roller, joystick, cross direction or pushbutton, and plane or arc contact control interface including an optical sensor, induction sensor, capacity sensor, static sensor, ultrasonic sensor or contact variable resistance or other sensing means; video display interface including light emission or monitor; audio display interface including speaker or microphone; power supplier including cell or super capacity; and a flexible wristband allowing flexible transformation that is made of foldable or soft materials extending at both ends of the control casing in fully or semi-closed loop to be worn in a wrist for wrist control operation or removed for adjustment of the diameter of the wristband to compromise hand-held or finger grip operation in receiving or/and transmitting commands, or transmitting information, audio signals, video signals for display, or applying partial or total wired control or wireless remote control to a certain system by providing a flexible transformation and comfortable holding for control operation that is ergonomics compliance.

Wherein, the wristband may be provided in a form of a chain used by a traditional wrist watch, a belt, expansion material, expansion structure or foldable structure or semi-closed loop for wearing in the wrist to operate the control casing using another hand to facilitate carrying along to prevent loss, and for hand-held or finger gripped operation for wired or wireless control.

### BRIEF DESCRIPTION OF THE DRAWINGS

Fig. 1 is a schematic view showing a control device coupled to a wristband of the present invention.

Fig. 2 is schematic view showing the present invention provided with a ball, roller, joystick or cross direction control structure in hand-held operation.

Fig. 2A is a schematic view showing adjustment of the wristband structure of the present invention in hand-held operation.

Fig. 3 is a schematic view showing the present invention provided with a ball, roller, joystick or cross direction control structure in wrist wireless control operation.

Fig. 4 is a schematic view showing that the wristband of the present invention is directly held by fingers.

Fig. 5 is a schematic view showing another example of a contact control device in the present invention.

Fig. 6 is a schematic view showing that the present invention is hand-held for wireless control operation using a contact control device.

Fig. 7 is a schematic view showing that the present invention is in wrist wireless control operation using a contact control device.

Fig. 8 is a schematic view showing that the present invention is hand-held for wired control operation using a ball, roller, joystick or cross direction control structure.

Fig. 9 is a schematic view showing that the present invention is hand-held for wired control operation using a contact control device.

Fig. 10 is a schematic view showing the wristband of the present invention is made of expansion material.

Fig. 11 is a schematic view showing that the wristband of the present invention is made of an expansion mechanism.

Fig. 12 is a schematic view showing a semi-closed loop structure of the wristband of the present invention.

Fig. 13 is a schematic view showing another example of a semi-closed loop structure of the wristband of the present invention.

Fig. 14 is a schematic view showing that the wristband structure of the present invention is made of two pieces of resilient materials.

Fig. 15 is a schematic view showing that the wristband structure of the present invention is made of a chain.

Fig. 16 is a schematic view showing that pushbuttons are provided at the front and the rear ends of the control casing.

Fig. 17 is a schematic view showing another example of wrist wireless control operation of the present invention.

Fig. 18 is a schematic view showing an example of the present invention having pushbuttons provided at the front and the rear ends of the control casing.

Fig. 19 is a schematic view showing another example of wrist wireless control operation of the present invention.

Fig. 20 is a view showing an example that the present invention can be turned 180 degrees.

Fig. 21 is another view showing an example that the present invention can be turned 180 degrees.

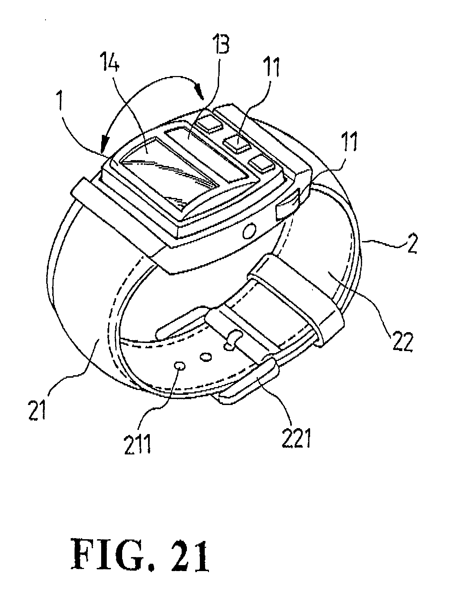

Fig. 21 is a view showing another example that the present invention can be turned for a 180 degrees.

### DETAILED DESCRIPTION OF THE PREFERRED EMBODIMENTS

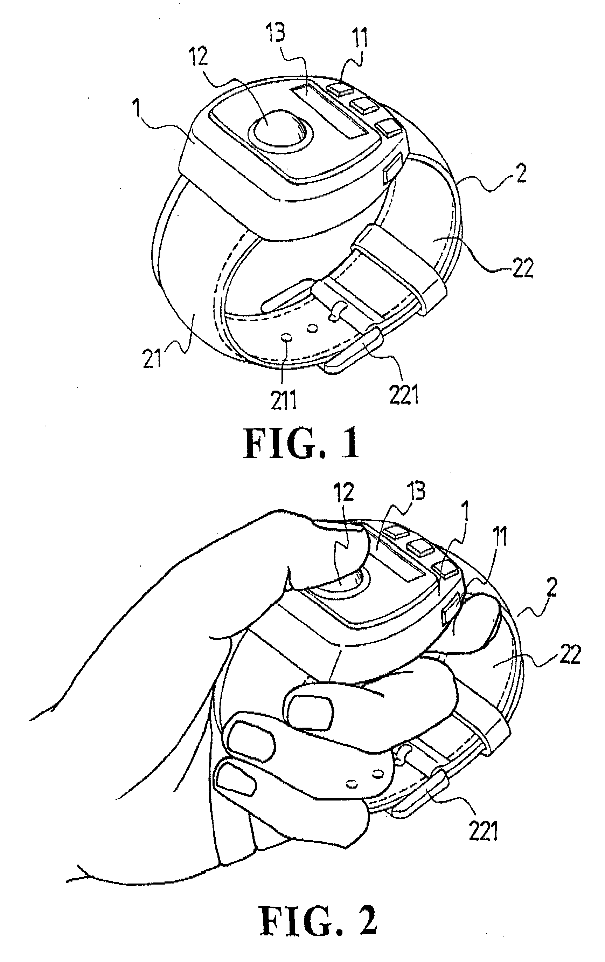

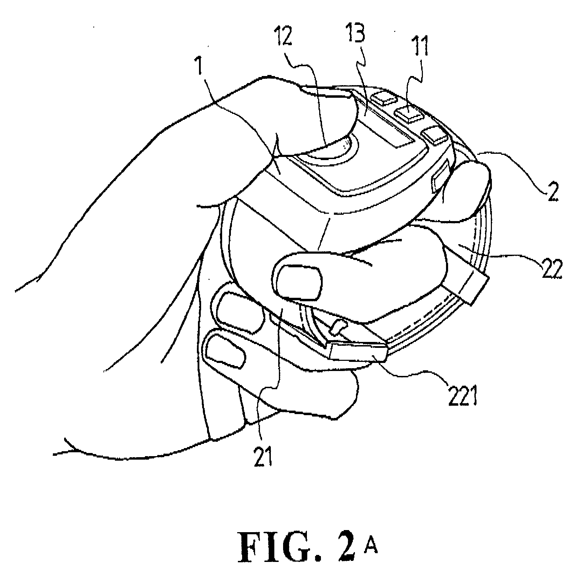

Referring to Figs. 1 and 2, a wrist and hand-held wireless or wired control device is comprised of a control casing 1 and a wrist band structure 2. Wherein: the control casing 1 contains circuits and I/O operation interface and display interface to transmit or/and receive, operate and control commands or information, audio signals or video signals or to apply partial or full wired or wireless remote control functions to a certain device. A control switch 11 and any other direction control structure 12, namely, a ball, a roller, a joystick or a cross depending on requirements of individual industry of application, and a monitor 13 that is capable of data reading may be provided on the front, the rear and/or the peripheral of the control casing 1. As required, an optional power supplier, e.g. cell or super capacity, may be provided in or to the casing. Said control device casing 1 also provides structure to connect to a wristband. For example, a recess and connection pin or catch, or through hole, or any other means generally known to the industry for connecting the wristwatch may be each provided at both ends of the control casing 1.

A wristband 2, made of foldable or soft material extends to form a fully closed loop or a semi closed loop that is flexible for transformation to function as a fastener for fixation or adjustment, and connects to the front and the rear end of the control casing 1 for its user to wear on the wrist. To prevent from falling off during operation and to secure the holding for control, the wristband 2 may be directly worn in the wrist for operation by the other hand of the user. Or it may be removed from the wrist to be held by hand or by penetrating one or more than one fingers through the loop by taking advantage of its flexibility for transformation or by adjusting the loop diameter.

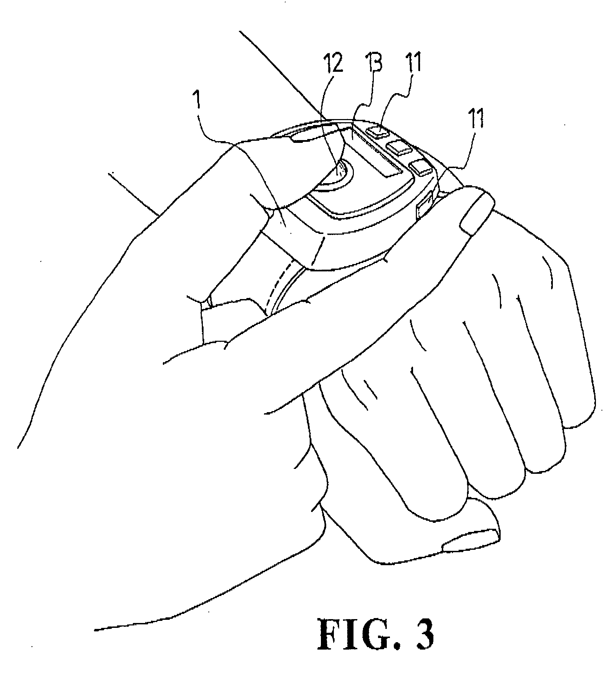

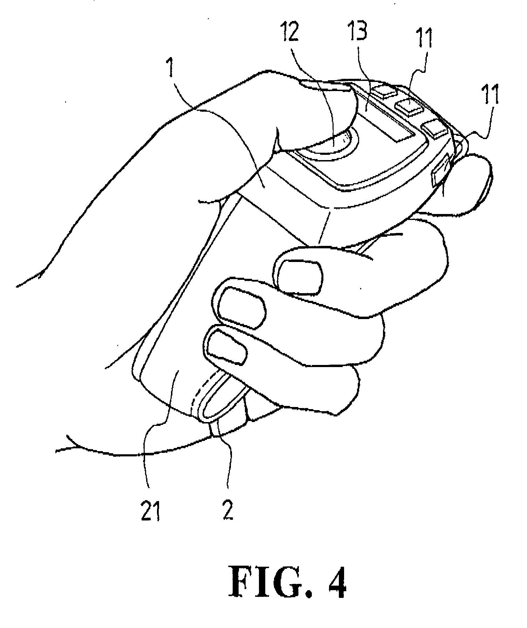

The primary purpose of the present invention is to operate the control device either by wearing it in the wrist or holding it in the hand. As illustrated in Fig. 2, the user is using his thumb to operate a ball or other operation control 12 in conjunction with the control casing 1 adapted to the wristband 2 while the other fingers of the same hand are firmly holding the casing through the loop formed by the wristband 2. As illustrated in Fig. 2A, as the wristband 2 is flexible and adjustable, the diameter of the loop is reduced to allow only the insertion of the index and the middle fingers through the loop for operation as preferred by the user. In Fig. 3, the user wears the control casing 1 and the wristband 2 in his left hand while using the right hand to proceed wireless control transmission. By wearing the control casing 1, there are no risks of improper holding in hand for the casing 1 to fall on the ground and get damaged. The control casing 1 adapted to the wristband 2 also permits easy storage and carrying along wherever the user goes. Furthermore, as illustrated in Fig. 4, the present invention is directly held in the palm while sparing the thumb to operate the control casing 1.

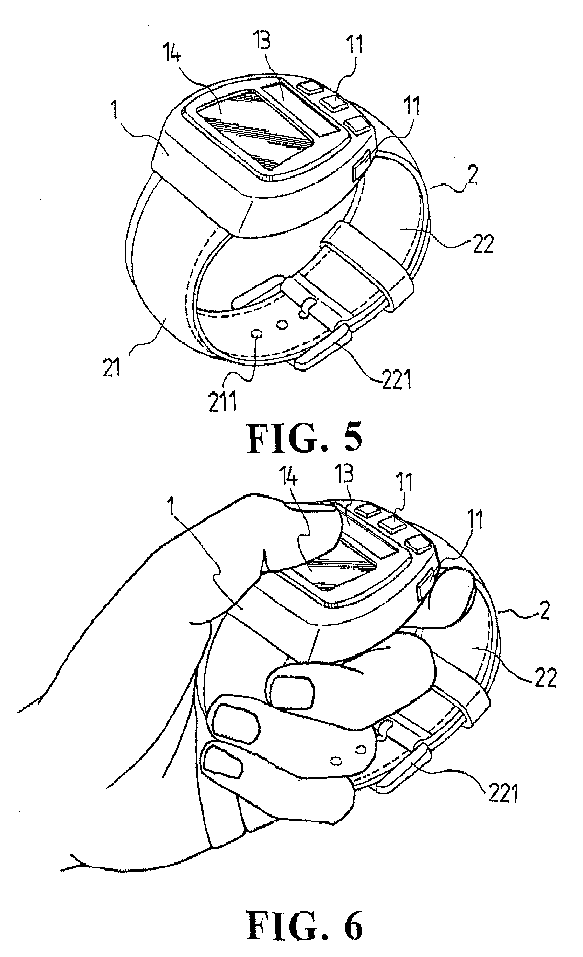

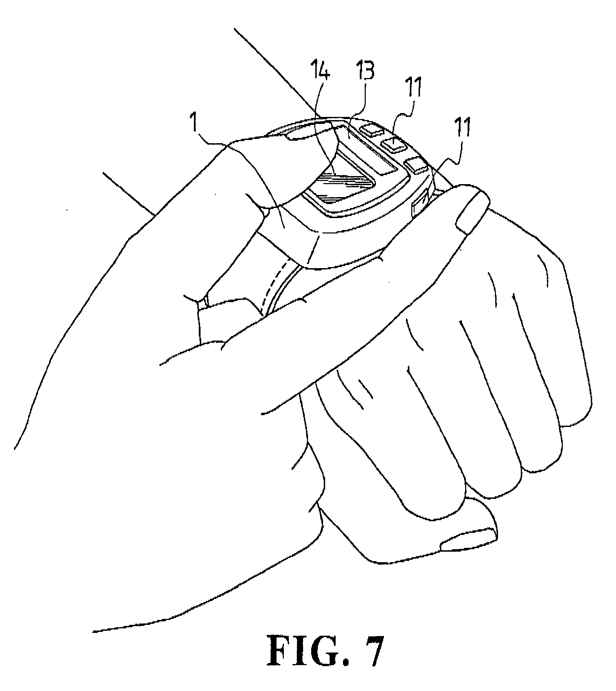

However, the control casing 1 is not limited to said ball, roller, joystick or cross direction control structure 12 as disclosed above. Now referring to Fig. 5, said control casing 1 relates to a hollow casing in any dimension as practical. It contains circuit, output interface and display interface required to transmit or/and receive commands, or to transmit information, or to apply wired control or wireless remote control to a certain device. A press button switch 11 may be provided on the front, the back or the peripheral of the control casing 1. However, the control interface for manual input may be in the form of a plane or arc contact control interface comprised of an optical sensor, induction sensor, capacity sensor, static sensor, ultrasonic sensor or contact variable resistance or any other sensing means, and related circuit. Optionally, a monitor 13 that is capable of reading data may be provided on the front of the control casing 1 and a power supplier, e.g. a cell or super-capacity, may be also provided in or to the control casing 1. As a result, the control casing 1 adapted to the wristband 2 may be operated using both of the thumb and the index finger of the same hand or from the other hand with the wristband 2 around the wrist or held in the hand as respectively illustrated in Figs. 6 and 7, thus achieving the same benefits to prevent from falling on the ground, to securely hold the control casing for operation and to facilitate carrying along and storage.

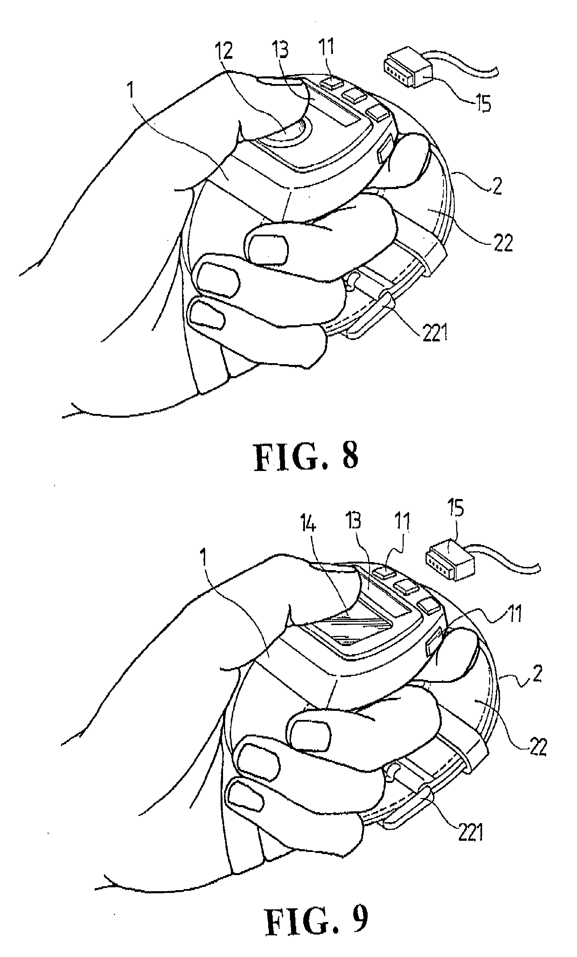

Furthermore, functions including operation of commands and data transmission or reception or/and transmission of remote controlled message available by the present invention can be made by means of infrared or radiation frequency or ultrasonic to be selected depending on the practical needs. Or, a conductor and plug-socket unit can be used for connection. As illustrated in Fig. 8, an adapter may be provided at the front end or on either side or at any location as desired on the control casing provided with a ball, roller, joystick or cross direction operation structure 12 to receive insertion of a transmission line 15 for carrying out power transmission, command operation and data transmission and control. Similarly, as illustrated in Fig. 9, the adapter may be provided at the front end or on either side or at any location as desired on the control casing provided with the wrist and hand-held wireless or wired control device having a plane or arc operation interface to receive insertion by the transmission line 15 for power transmission, command operation, data transmission and message reception or/and transmission control. The transmission line 15 of a preferred embodiment shown in Figs. 8 and 9 may be built in the control casing by proper arrangement of the space inside the control casing 1 to be ready for connection to a certain system when needed.

The wristband 2 in a preferred embodiment of the present invention may have a number of configurations. Referring to Figs. 1 and 5, said wristband 2 is essentially comprised of the wristband 2 integrated with the control casing 1. One side 21 of the wristband 2 has multiple fixing holes 211 extending toward the end of the wristband 2, while a matching shackle 221 from the other side 22 of the wristband 2 is provided for the user to select the proper hole 211 to buckle up both the hole 211 and the shackle 221.

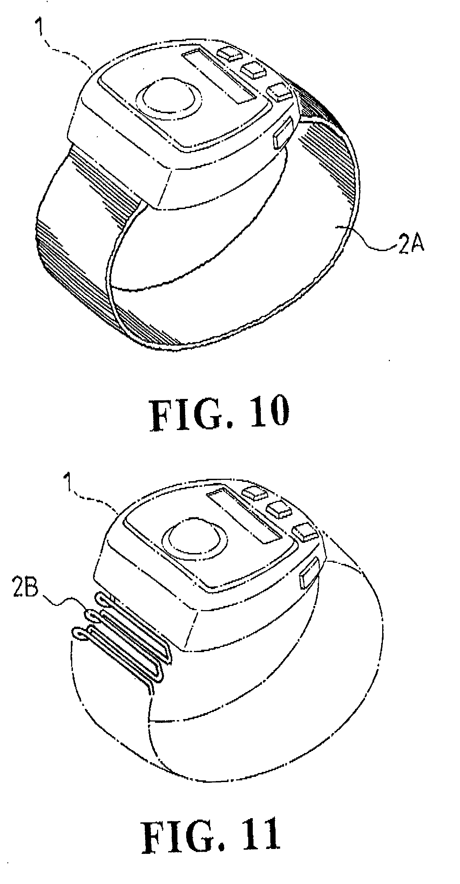

Now referring to Fig. 10, wherein, the wristband 2 is made in a consistent loop 2A of expandable and flexible material to couple to the control casing 1 for wearing in the wrist or hand-held for direct control operation. In Fig. 11, the wristband 2 relates to a retractable mechanism 2B allowing pull and extension effects to couple to the control casing 1 for wearing in the wrist or hand-held for direct control operation.

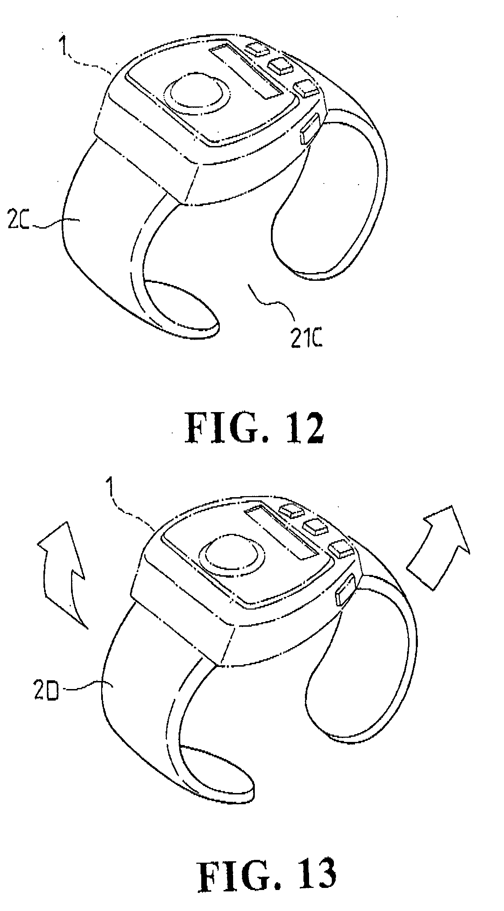

The wristband 2 may be in the form of two pieces of rings in semi-closed loop 2C as illustrated in Fig. 12. Wherein, a slit 21C is provided between open ends of both rings of the loop 2C to grip on the wrist. As illustrated in Fig. 13, both pieces of rings of a semi-closed loop 2D of the wristband 2 are each provided with a coil at where they are pivoted to the control casing so to spread up to facilitate wearing in the wrist.

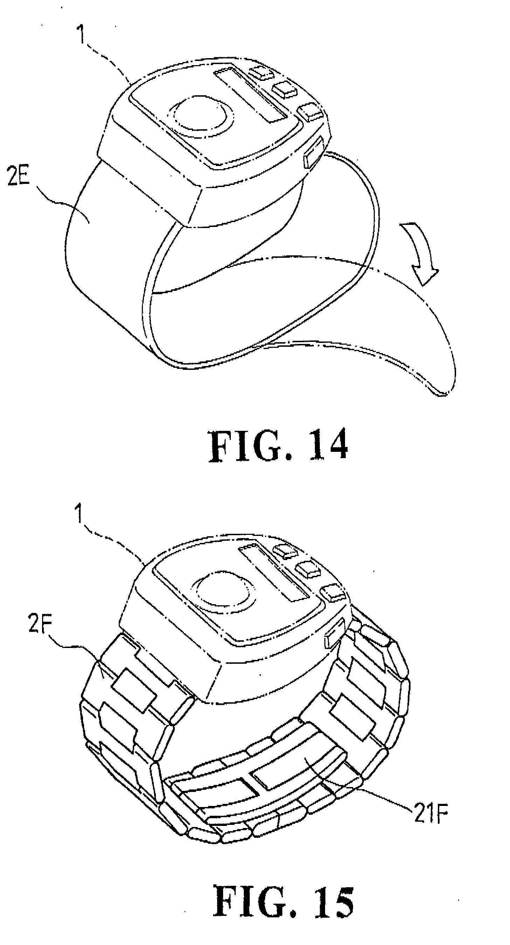

The wristband 2 can be made in a structure 2E having a whole piece of flexible loop with one end fixed to the control casing 1 and the other end connect to another end of the control casing 1 as illustrated in Fig. 14. In use, the end connected to the control casing 1 of the structure 2E can be disconnected to wear the control casing 1 in the wrist or to remove the control casing 1 for hand-held operation.

Furthermore, as illustrated in Fig. 15, the wristband 2 is made in a structure 2F in a whole piece of chain or in multiple metal chains connected to one another. A buckling structure 21F is provided to open up or fasten in the adjustment for a proper diameter of a loop formed by the structure 2F depending on the size of the wrist of the wearer.

It is to be noted that the present invention of the wrist and hand-held wireless or wired control device comprised of the control casing 1 and the wristband 2 as disclosed above does not restrict the type or structure of said wristband 2. That is, any structure that provides a loop wristband naturally falls within the teaching of the present invention. The control casing 1 may be also provided in circular, square or any other irregular shape, and have at its both ends provided with recesses, connecting pins or catches or through holes or any other means generally known to the art of the present invention for incorporating the wristband to form the wrist and handle-held control device of the present invention.

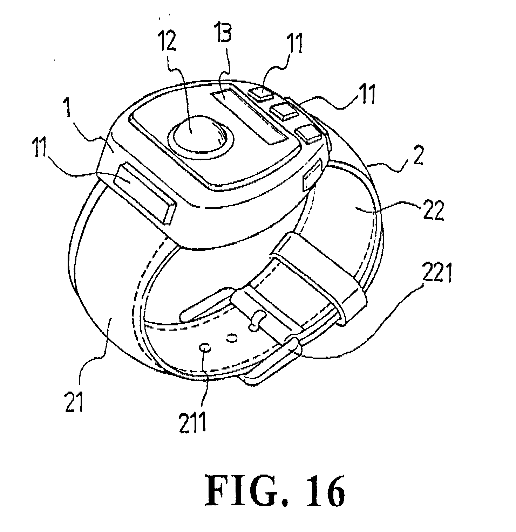

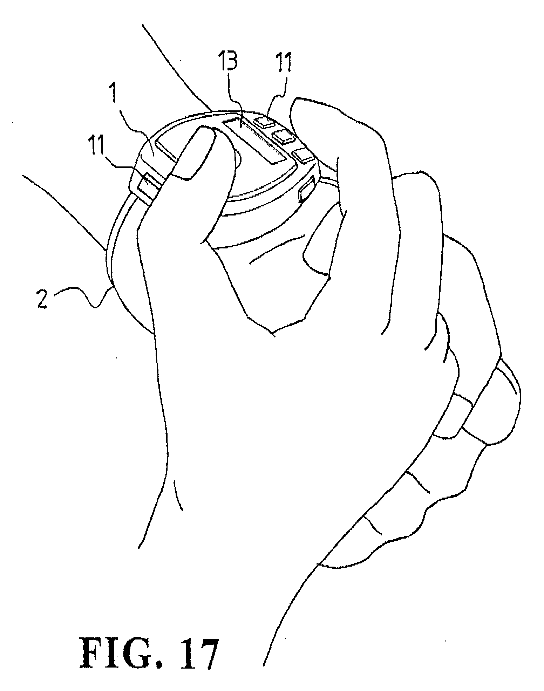

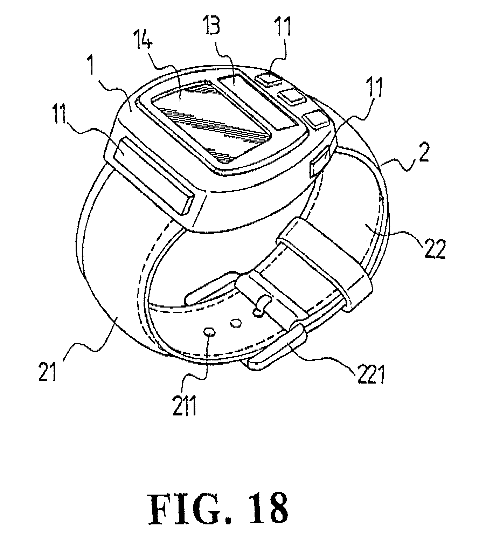

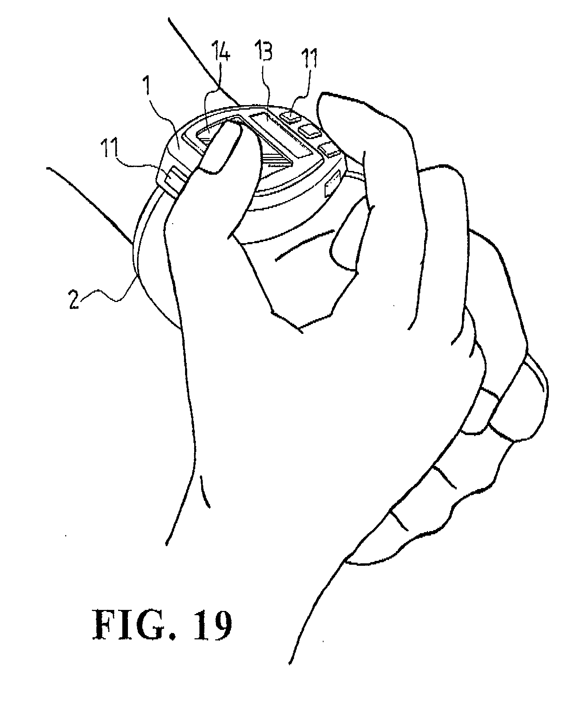

The wrist and hand-held wireless or wired control device of the present invention may be further provided with one or more than one set of pushbutton 11 at the front end, rear end or both ends of the control casing 1 as illustrated in Figs. 16, 17, 18 and 19, for its user to wear in his/her wrist while using the thumb from the other end to proceed direction and toggle operation while using the other fingers of the same hand to operate the pushbutton(s) 11 in achieving the purpose of easy carrying along and storage, and preventing the control casing 1 from falling on the ground in the course of hand-held operation. Figs. 16 and 17 show examples of using a ball, roller, joystick or cross direction as a control interface in conjunction with the pushbutton(s) provided at the front, the rear or both ends of the control casing 1. As illustrated in Figs. 18 and 19, a plane or arc contact operation interface comprised of an optical sensor, induction sensor, capacity sensor, static sensor, ultrasonic or contact variable resistance or any other sensing means is used in conjunction with the pushbutton(s) provided at the front, the rear or both ends of the control casings 1.

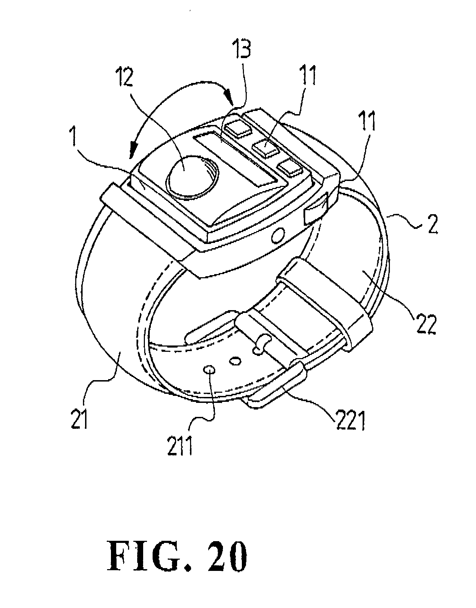

The present invention may be further incorporated to a traditional digital or analog electronic or mechanical watch to provide multiple purposes. The control casing 1 may be made allowing a 180-degree turning for one side of the control casing 1 to accommodate the wrist and hand-held wireless or wired control device while the other side of the control casing 1 to accommodate a display interface and other options; or one side of the control casing 1 to accommodate control and display interfaces related to the wrist and hand-held wireless or wired control device while the other side to accommodate a monitor of a wristwatch. Figs. 20 and 21 show a preferred embodiment of the present environment that allows a 180-degree turning by the control casing 1.

A wrist and hand-held wireless or wired control device of the present invention utilizing the traditional structure of a wristband adapted to related circuit, output interface and display interface to receive or/and transmit control commands or transmit information or apply wired control or wireless remote control to a certain system can be used in communication, information, video signals or audio signals, or electric home appliances, or toys, or education, and other domestic systems or in other industries and manufacturing purposes. It also provides operation and display by incorporating with a traditional digital or mechanical member identical to a wrist watch for becoming a multiple purpose wrist and hand-held control operation allowing easy carrying along and convenience. Accordingly, an application is duly filed hereunder.

## Claims

1. A wrist and hand-held wireless or wired control device comprised of a control casing containing circuit, I/O control interface and display interface and a flexible wristband allowing transformation made of foldable or soft materials extending at both ends of the control casing in fully or semi-closed loop to be worn in a wrist for wrist control operation or removed for adjustment of the diameter of the wristband to compromise hand-held or finger grip operation in receiving or/and transmitting commands, or transmitting information, audio signals, video signals for display, or applying partial or total wired control or wireless remote control to a certain system to achieve the purposes of easy carrying along and storage and preventing from falling on the ground in use while giving flexible transformation and comfortable holding for control operation that meeting ergonomics.

2. A wrist and hand-held wireless or wired control device as claimed in Claim 1, wherein, it is comprised of hand-held control related circuit, control interface and display interface including mechanical control interface by a ball, roller, joystick or cross direction or pushbutton, or plane or arc touch control interface by means of an optical sensor, induction sensor, capacity sensor, static sensor, ultrasonic sensor or contact variable resistance, or video display interface including light emission or monitor, or audio interface including speaker, microphone, and a power supplier including cell or super capacity; the control casing having extended at its both ends the wristband made of multiple sections of foldable or soft material allowing flexible transformation in fully or semi-closed loop and a buckling piece for fixing and adjustment of the diameter of the wristband to be worn in the wrist or hand-held or finger gripped for control operation.

3. A wrist and hand-held wireless or wired control device as claimed in Claim 1, wherein:
said device is comprised of a control casing in any shape as desired containing circuit, I/O interface and display interface required for receiving or/and transmitting control commands, or transmitting information, audio signals, displaying video signals or applying partial or total functions of wired control or wireless remote control to a certain system; pushbutton switch provided at the front or rear or peripheral of the control casing and a ball, roller, joystick or cross direction control structure allowing touch control of a certain industrial system; a monitor for data reading; an optional power supplier including cell or super capacity for hand-held control operation; and recesses, connection pins or catches or through holes or any other connection means generally known to this art for the control casing to connect at its both ends to a wristband; and
a wristband structure made of foldable or soft material allowing flexible transformation lengthways in fully or semi-closed loop and a buckling piece for fixing or adjusting the loop, connected to the front and the rear ends of the control casing for wearing in the wrist or adjusting the loop diameter when removed.

4. A wrist and hand-held wireless or wired control device as claimed in Claim 1, wherein, the control casing containing circuit, output interface and display interface required for reception or/and transmission of control commands, transmission of information or applying wired control or wireless remote control to a certain system; pushbutton switches at the front, the rear or the peripheral of the control casing; manual input control interface of a plane or arc contact control interface and related circuit including optical sensor, induction sensor, capacity sensor, static sensor, ultrasonic sensor, contact variable resistance or other sensing means; an optional data reading monitor; and a power supplier including cell or super capacity for hand-held control or operation.

5. A wrist and hand-held wireless or wired control device as claimed in Claim 1, wherein, the reception or/and transmission of control command and data transmission or reception or/and transmission of remote control message is down by infra-red or radiation frequency or ultrasonic means, or with a conductor adapted to a plug and socket unit.

6. A wrist and hand-held wireless or wired control device as claimed in Claim 1, wherein, an adapter is provided in the front end or either side or any location as desired on the control casing provided with a ball, roller, joystick, or cross direction control structure to achieve wired connection for transmission of power in transmission or/and reception of control commands, data, and control message.

7. A wrist and hand-held wireless or wired control device as claimed in Claim 1, an adapter is provided in the front end or either side or any location as desired on the control casing provided with a plane or arc control interface to achieve wired connection for transmission of power in transmission or/and reception of control commands, data, and control message.

8. A wrist and hand-held wireless or wired control device as claimed in Claim 1, wherein, one or more than one set of pushbutton is provided at the front, or the rear or both ends of the control casing.

9. A wrist and hand-held wireless or wired control device as claimed in Claim 1, wherein, the device is connected to a traditional digital or analog electronic or mechanic wristwatch.

10. A wrist and hand-held wireless or wired control device as claimed in Claim 1, wherein, the control casing can be turned for 180-degree and one side of the control casing containing a control interface and the other side having a display interface; or one side having control interface and display interface while the other side having a wrist watch display.

11. A wrist and hand-held wireless or wired control device as claimed in Claim 1, within, the device is comprised of a control casing and a wristband to be applied for wired and wireless control of communication, information, video signals, audio signals, education, toys, other electric home appliances or industrial and manufacturing purposes.
